# EUROPEAN PATENT SPECIFICATION

(11) **EP 2 104 293 B1**
(45) Date of publication and mention of the grant of the patent: **23.03.2016**
(21) Application number: 06817978.7
(22) Date of filing: 08.12.2006
(51) Int. Cl.: H04L 27/00

(54) **METHOD FOR AUTOMATIC FREQUENCY CORRECTION OF A MOBILE TERMINAL AND THE SYSTEM THEREOF**
VERFAHREN ZUR AUTOMATISCHEN FREQUENZKORREKTUR EINES MOBILEN ENDGERÄTS UND SYSTEM DAFÜR
PROCÉDÉ DE CORRECTION AUTOMATIQUE DE FRÉQUENCE D'UN TERMINAL MOBILE ET SYSTÈME ASSOCIÉ

(43) Date of publication of application: 23.09.2009
(73) Proprietor: ZTE Corporation, Shenzhen, Guangdong 518057 (CN)
(72) Inventor: TIAN, Xuehong, Guangdong 518057 (CN)
(74) Representative: Ahner, Philippe
(86) International application number: PCT/CN2006/003351
(87) International publication number: WO 2008/067691

(56) References cited:
- WO-A1-02/25881
- CN-A- 1 460 348
- CN-A- 1 777 160
- US-B1- 6 700 866

## Description

### Filed of the Invention

The present invention relates to the field of mobile communication, more particularly, to an automatic frequency deviation correction system of a mobile terminal such as WCDMA mobile terminal and an automatic frequency deviation correction method.

### Background of the Invention

In a mobile communication system, there is generally certain deviation between the receiving frequency of a mobile terminal and the transmitting signal frequency of a base station. The frequency deviation comprises local oscillation frequency deviation and Doppler frequency shift.

The local oscillation frequency deviation refers to the difference between the phase-locked frequency of a mobile phone crystal oscillation and the transmitting frequency of a base station. As generally the transmitting frequency of the base station is relatively exact, the deviation is mainly associated with the crystal oscillation that the mobile terminal uses, more concretely, with the precision grade, ambient temperature and the aging of crystal oscillation.

Doppler frequency shift is caused by the movement of the mobile terminal, and the value thereof is associated with the speed which the mobile terminal is moving at. The faster the mobile terminal is moving relative to the base station, the larger the Doppler frequency shift is. Therefore, as for the WCDMA mobile phone terminal supporting high speed mobile services, it must have the ability to track larger Doppler frequency deviations.

The normal communication demand can be met only when the error between the transceiving frequency of the mobile terminal and the transceiving frequency of the base station is controlled within a certain range. Therefore, each mobile terminal contains an Automatic Frequency Deviation Correction Control (AFC) for tracking the transmitting signal frequency of the base station.

As for a WCDMA terminal, only when the frequency difference between the two is less than about 1PPM (this value is associated with the algorithm of chips and environment of channels), the terminal can achieve synchronization and access to the network. While the frequency difference between the two is required to be less than 0.1PPM to satisfy voice and digital services.

A plurality of solutions have been provided for automatic frequency deviation correction system at present, however, but so far most patents focused on the exact frequency deviation evaluation and compensation of automatic frequency deviation correction system. For example, in a patent of Qualcomm Inc, entitled "Method and apparatus for acquiring and tracking pilots in a CDMA communication system" with the application number CN02816542, it is proposed that the frequency deviation of individual rake receiver is digitally compensated on each rake receiver, and in an analog frequency deviation correction system, an integral compensation is conducted by using the weighted mean of individual rake receivers. In a patent of Koninklijke Philips Electronics NV, entitled "Iterative CDMA phase and frequency acquisition" with the application number CN03810216, the iterative frequency compensation is achieved by first conducting coarse evaluation of frequency deviation and compensating and then conducting accurate evaluation and making the frequency deviation compensation.

The methods of the above patents are all under an a experience condition that the initial frequency deviation can not be too large, and generally speaking, should be less than 1PPM. At such frequency deviation level, the mobile terminal can demodulate the pilot symbols, estimate more exact frequency deviation value and then achieve the frequency deviation correction. To meet such requirements, a relatively strict requirement is imposed on the crystal oscillation that the mobile terminal uses, that is, the precision of the crystal oscillation of a mobile phone is required to be less than 1PPM and the crystal oscillation used must be provided with temperature compensation.

D1 (WO02/25881A1) relates to a method for capturing frequency, in particular capturing initial frequency, by way of known synchronization sequence. This method has similar limitation.

Additionally, as the WCDMA terminal supports high speed mobile services, it is necessary for the WCDMA terminal to be able to process relative larger Doppler frequency deviation. When the WCDMA mobile terminal is moving at a speed of 500km/h, its Doppler frequency shift is about 0.5PPM. Therefore, the WCDMA terminal must be able to track Doppler frequency shift with the magnitude of ± 0.5PPM. However, so far no good methods for tracking Doppler frequency shift have been provided in the relative art.

### Summery of the Invention

The present invention provides an automatic frequency deviation correction method and system for a mobile terminal, aiming at the two categories of frequency deviations, local oscillation frequency deviation and Doppler frequency deviation, that the automatic frequency deviation correction (AFC) system needs to process, to ensure that the terminal can exactly and effectively track the receiving frequency deviation value and process the local oscillation frequency deviation and the Doppler frequency deviation with a large range.

According to one aspect of the present invention, it is provided an automatic frequency deviation correction method for a mobile terminal, comprising the step of configuring an initial frequency deviation value for the mobile terminal, which includes the following steps: when the mobile terminal initially accesses a cell, within a predetermined frequency deviation scanning range it synchronizes the slots at intervals of a predetermined frequency deviation, and obtains the signal-to-interference ratio (SIR) of the primary synchronization signals of the frequency deviation; after scanning the whole predetermined frequency deviation scanning range, the frequency deviation value corresponding to the maximum SIR of all the obtained SIRs is selected as the initial frequency deviation value; and the initial frequency deviation value is configured for the mobile terminal to make sure that the frequency deviation is controlled within the predetermined frequency deviation range during the initial access.

According to another aspect of the present invention, it is provided an automatic frequency deviation correction system for a mobile terminal, comprising an initial frequency deviation scanning evaluation module which, when the mobile terminal initially accesses a cell, is used for synchronizing the slots at intervals of a predetermined frequency deviation within a predetermined frequency deviation scanning range and obtaining the signal-to-interference ratio (SIR) of the primary synchronization signals of such frequency deviation, and for selecting the frequency deviation value corresponding to the maximum SIR of all the obtained SIRs as the initial frequency deviation value after scanning the whole predetermined frequency deviation scanning range; and a frequency deviation correction control module for configuring the initial frequency deviation value for the mobile terminal to make sure that the frequency deviation is controlled within the predetermined frequency deviation range during the initial access.

The technical effects of the present invention are as follows:
(1) enlarging the frequency deviation correction range
   A coarse evaluation of the initial access frequency deviation can be performed by adding an initial frequency deviation evaluation module on the basis of the cell search module, so as to solve the problem that the initial access frequency deviation is too large. In this way, even if the initial frequency deviation is very large, it can be ensured that the mobile terminal is able to achieve the initial access and demodulation of pilot signal (CPICH), so as to reduce the requirement on the precision of crystal oscillation.
(2) controlling the frequency deviation value of the crystal oscillation at the top layer to reduce the requirement on the crystal oscillation
   A temperature detector is provided, and the frequency deviation value of the mobile terminal is ensured to always be able to track the effect of temperature on the frequency deviation (when the crystal oscillation is between -45°C to 80°C, the frequency deviation generally is ±2.5PPM) by maintaining a temperature/frequency deviation control table. There is no need to use the high precision temperature compensation crystal oscillation any more.
(3) keeping tracking the performance changes of the physical apparatus
   The historical states of AFC system are stored to ensure a smaller initial frequency deviation for each initial access, and the performance index deviation caused by the aging of the apparatus itself can be tracked.
(4) tracking Doppler frequency deviation to ensure a smooth transition when switching the cell
   The tracking on Doppler frequency deviation is maintained when switching the cell, reducing the probability of communication interruption caused by the switching of the cell.
(5) increasing the precision of frequency deviation calculation
   When evaluating the accurate frequency deviation value, according to the magnitude of the current frequency deviation, along with the frequency deviation value being reduced continuously, the interval of the pilot signals used for the frequency deviation evaluation is enlarged and the precision of the frequency deviation evaluation is increased continuously so that the frequency deviation evaluation system is able to produce an accurate frequency deviation evaluation value to ensure the exact operation of the accurate frequency deviation correction system.

It can be seen from the above description that the present invention possesses the following advantageous effects:
1. This method provides an automatic maintenance on the temperature/frequency deviation table and a test scaling process for AFC which is completely automatic, without the aid of any devices or manual work, so that the operation of initial scaling can be completed automatically during the high or low temperature test or in use, and the scaling is very accurate. Even if the level of the crystal oscillation is changed, the operation of the initial scaling can be completed, which greatly reduces the leaving-factory test complexity of the terminal. The requirement on the precision of the crystal oscillation can be greatly reduced because of the automatic scaling process and large range of frequency deviation scanning correction;
2. This method provides a temperature/frequency deviation compensation in the control layer. There is thereby no need to select the expensive crystal oscillation with temperature compensation, and it is enough to select a common voltage control crystal oscillator;
3. This method provides the tracks on Doppler frequency deviation, to ensure a good communication performance of the terminal in the condition of high speed moving and greatly reduce the probability of dropping-call during the inter-frequency switching and the intra-frequency switching;
4. This method provides the maintenance on the temperature/frequency deviation table. At every time the mobile phone is powered on, the current initial frequency deviation is acquired according to the current temperature, which enables the mobile phone to directly enter into the operation mode with a smaller frequency deviation, so as to increase the access speed and the success rate of the mobile phone access. This compensation can increase the success rate of the access very effectively, especially in the areas where the signal is weak or under the adverse environment with extreme high or low temperature.
5. This method provides a dynamic maintenance on temperature/frequency deviation compensation, enabling the terminal to always automatically track the changes in performance of physical devices and to avoid the reduced performance caused by the aging of physical devices within the lifetime of the mobile terminal (generally speaking, the aging of a crystal oscillation is about ± 1PPM/year. Additionally, DAC converter and the like also is ageing to a certain degree)
6. This method provides a large range of frequency deviation scanning so that the terminal can be restored automatically after the temperature control/frequency deviation table is out of effect. The replacement of certain parts during updating the software and repairing the mobile phone can not disable the operation of the mobile phone.

The performance of a mobile terminal in adverse environments is a very important key index. This method enables the terminal to have an outstanding performance in the field by providing a higher access performance and keeping a lower dropping-call rate in adverse environments (including high speed movement, extreme high or low temperature, weak signal in remote areas, downtown areas with great interferences).

### Brief Description of the Drawings

Figure 1 is an integral block diagram of automatic frequency deviation correction (AFC) system according to an embodiment of the present invention;
Figure 2 is a block diagram of the frequency deviation correction control module according to the embodiment of the present invention;
Figure 3 is a principle diagram of the calculation process of the accurate frequency deviation calculation module according to the embodiment of the present invention;
Figure 4 is an operation flow chart of the automatic frequency deviation correction system in a test mode according to the embodiment of the present invention;
Figure 5 is an operation flow chart of the automatic frequency deviation correction system in the normal operation mode according to the embodiment of the present invention;
Figure 6 is an example of the work scene of the switching mode according to the embodiment of the present invention;
Figure 7 is an operation flow chart in the switching mode according to the embodiment of the present invention; and
Figure 8 is a flow chart of the automatic frequency deviation correction method for a mobile terminal according to the embodiment of the present invention.

### Detailed Description

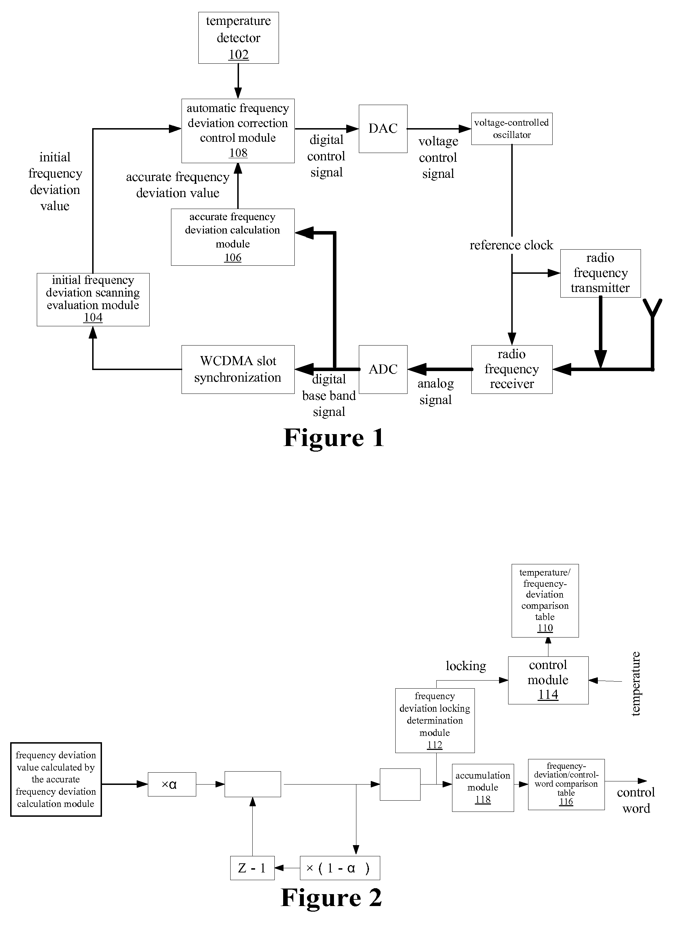

Figure 1 is a simple block diagram of the entire AFC control system of the present invention.

The system comprises the followings parts:
1. a temperature detection module 102 in charge of checking the ambient temperature and transmitting the obtained temperature to the automatic frequency deviation correction control system.
2. an initial frequency deviation scanning evaluation module 104 for synchronizing the slots at intervals of a predetermined frequency deviation within a predetermined frequency deviation scanning range when the mobile terminal initially accesses a cell and obtaining the signal-to-interference ratio (SIR) of the primary synchronization signal at such frequency deviation; selecting the frequency deviation value corresponding to the maximum SIR from all the obtained SIRs as the initial frequency deviation value after scanning the whole predetermined frequency deviation scanning range. The module is an additional function added on the basis of the first step of cell synchronization of a WCDMA mobile terminal. After completing the first step of cell synchronization, the signal-to-interference ratio (SIR) of the primary synchronization signal is estimated according to the correlation value obtained by synchronization.
3. an accurate frequency deviation calculation module 106 for evaluating the accurate frequency deviation value according to the demodulated pilot symbol after the mobile terminal completes the initial frequency deviation configuration and demodulation of the pilot symbol.
4. a feedback control loop comprising the DAC module, the voltage control oscillator, the radio frequency transmitter, the radio frequency receiver and ADC module and the like as shown in the figure and used for calculating a new frequency deviation compensation value according to the current frequency deviation value so as to compensate the current frequency deviation value wherein the frequency deviation correction control module is also used to calculate the new frequency deviation compensation value according to the current frequency deviation value, for controlling the voltage- controlled oscillator to compensate the current frequency deviation value.
5. a frequency deviation correction control module 108 for configuring the initial frequency deviation value on the mobile terminal to ensure the frequency deviation during the first access to be controlled within the predetermined frequency deviation. This module serves to filter the input frequency deviation value and control the voltage control oscillator according to the calculated frequency deviation value. It also serves to maintain the comparison table of temperature/frequency deviation and track Doppler frequency deviation during the compression measuring mode. The block diagram of the system is illustrated in figure 2. The sub-systems mainly comprise the following parts: IIR filter module, an accumulation module 118, a frequency locking determination module 112, a temperature/frequency-deviation comparison table 110, a frequency-deviation/control-word comparison table 116 and a control module 114. When the mobile terminal switches the cell, the frequency deviation correction control module 108 is also used to store the frequency deviation compensation value of the current cell before switching into a new cell; and once switching into the new cell, the frequency deviation correction control module reads the current temperature of the new cell and looks up for the current temperature of the new cell from the temperature/frequency deviation table, and then obtains the initial frequency deviation value of the new cell and assigns the deviation to the new cell, wherein if the new cell has ever been measured, the frequency deviation compensation value stored previously is taken as the initial frequency deviation value of the new cell. The frequency deviation correction control module also serves to control the operation of the feed back control loop to enable the temperature detection module and accurate frequency deviation calculation module to repeat the operation continuously until the mobile terminal completes the frequency locking.

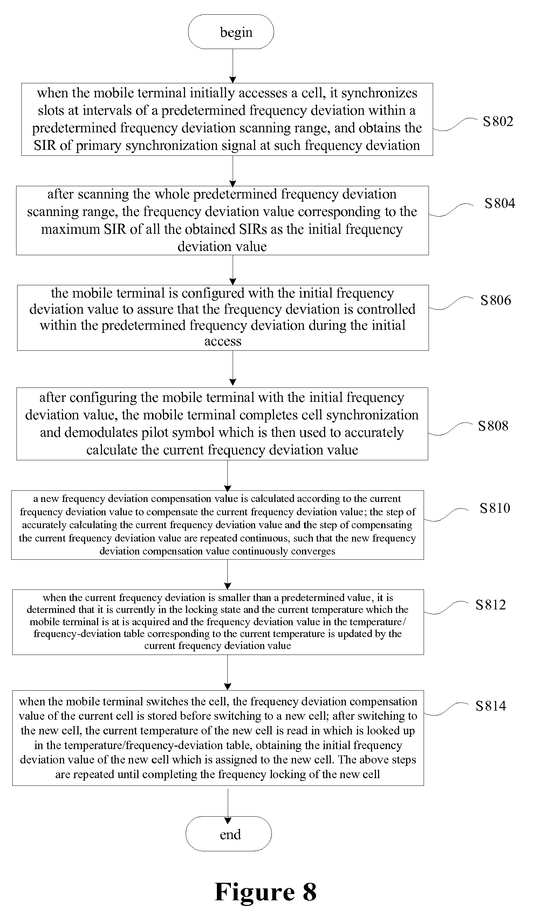

Figure 8 shows a flow chart of the automatic frequency deviation correction method for a mobile terminal according to the embodiment of the present invention, comprising the following steps:
Step S802: when the mobile terminal initially accesses a cell, it synchronizes the slots at intervals of a predetermined frequency deviation within a predetermined frequency deviation scanning range, and obtains the signal-to-interference ratio (SIR) of the primary synchronization signal at such frequency deviation;
Step S804: after scanning the whole predetermined frequency deviation scanning range, the frequency deviation value corresponding to the maximum SIR of all the obtained SIRs is selected as the initial frequency deviation value; and
Step S806: the initial frequency deviation value of the mobile terminal is configured to make sure that the frequency deviation is controlled within the predetermined frequency deviation during the initial access.

Alternatively, it is also comprised the step S808 for accurately calculating the current frequency deviation value, including the following steps: after configuring the initial frequency deviation value of the mobile terminal, the mobile terminal completes cell synchronization and demodulates the pilot symbol which is used for accurately calculating the current frequency deviation value.

Alternatively, it is also comprised the step S810 of feedback control, including the following steps: the new frequency deviation value is calculated according to the current frequency deviation value to compensate the current frequency deviation value; the step for calculating accurately the current frequency deviation value and the step for compensating the current frequency deviation value are repeated continuously such that the new frequency deviation compensation value converges continuously.

Alternatively, it is also comprised the step S812 for maintaining the temperature/frequency-deviation table, including the following step: if the current frequency deviation value is smaller than a predetermined value, it is determined that it is currently the locking state. The current temperature of the mobile terminal is acquired and the frequency deviation value corresponding to the current temperature in the temperature/frequency-deviation table is updated by the current frequency deviation value.

Alternatively, it is also comprised the step S814 of Doppler frequency deviation compensation, including the following steps: when the mobile terminal switches the cell , the frequency deviation compensation value of the current cell is stored until switching to the new cell; once switching to the new cell, the current temperature of the new cell is read in, the current temperature of the new cell is looked up in the temperature/frequency-deviation table, the initial frequency deviation value of the new cell is obtained and the value is assigned to the new cell, wherein if the new cell is ever measured, the frequency deviation compensation value stored previously is taken as the initial frequency deviation value of the new cell. The step for accurately calculating the current frequency deviation value, the step of feedback control and the step for maintaining the temperature/frequency-deviation table are repeated until the frequency locking of the new cell is completed.

It can be seen from the above that the technical effects of the present invention are as follows:
(1) enlarging the frequency deviation correction range:
   A coarse evaluation of an initial access frequency deviation can be achieved by adding an initial frequency deviation evaluation module on the basis of the cell search module so as to solve the problem that the initial access frequency deviation is too large. In this way, even if the initial frequency deviation is very large, it is ensured that the mobile terminal is able to achieve the initial access and demodulation on the pilot signal (CPICH) to reduce the requirement on the precision of crystal oscillation.
(2) controlling the frequency deviation value of the crystal oscillation at the top layer to reduce the requirement on the crystal oscillation:
   A temperature detector is provided. The frequency deviation value of the mobile terminal is ensured to always be able to track the effect of temperature on the frequency deviation (generally the frequency deviation of the crystal oscillation between -45°C to 80°C is ±2.5PPM) by maintaining the temperature/frequency-deviation control table. There is no need to use the high precision temperature compensation crystal oscillation any more.
(3) keeping tracking the changes in the performance of physical apparatus:
   The historical states of AFC system are stored to ensure a smaller initial frequency deviation at each initial access and track the performance index deviation caused by the aging of the apparatus itself.
(4) tracking Doppler frequency deviation to ensure a smooth transition when switching the cell:
   It keeps tracking the Doppler frequency deviation when switching the cell, to reduce the probability of communication interruption caused by switching the cell.
(5) increasing the precision of frequency deviation calculation:
   When evaluating the accurate frequency deviation value, according to the magnitude of the current frequency deviation, along with the frequency deviation value continuously being reduced, the interval of the pilot symbol used for the frequency deviation evaluation is enlarged and the precision of the frequency deviation evaluation is increased continuously so that the frequency deviation evaluation system is able to produce an accurate frequency deviation evaluation value to ensure an exact operation of the accurate frequency deviation correction system.

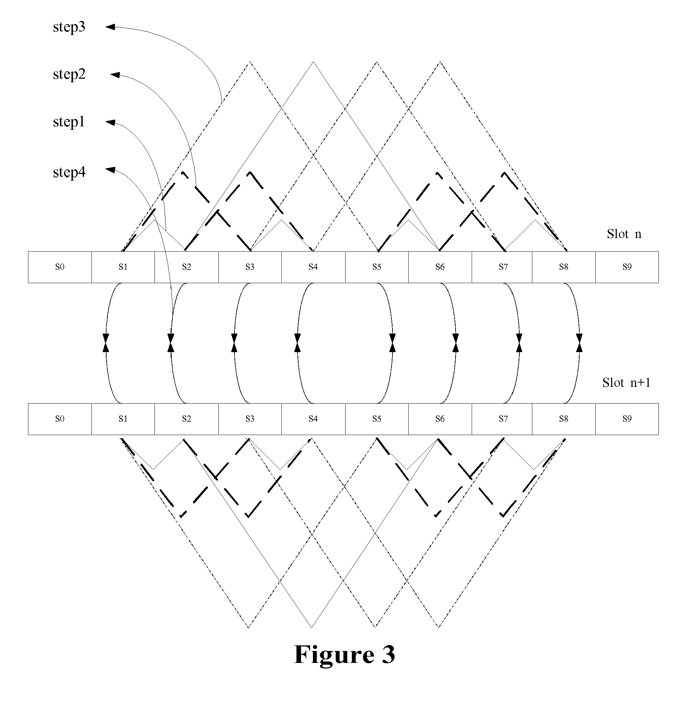

The operation process of the present invention will be described in details as follows:
Step 1: obtaining the initial frequency deviation
   The process is performed by the initial frequency deviation scanning evaluation module. The module synchronizes the slots at intervals of 1PPM according to the configured frequency deviation scanning range (generally ±5PPM), and obtains the signal-to-interference ratio (SIR) of the primary synchronization signal at the frequency deviation. After scanning the whole frequency deviation scanning range, the frequency deviation value corresponding to the maximum SIR of all the obtained SIRs (11 SIRs at ±5PPM) is selected as the initial frequency deviation value.
Step 2: configuring the initial frequency deviation
   The frequency deviation correction control module configures the initial frequency deviation value obtained above so as to make sure that the frequency deviation is controlled within 1PPM during the initial access.
Step 3: completing the cell synchronization and demodulating the pilot symbol
   The terminal can complete the cell synchronization and demodulate the pilot symbol at this initial frequency deviation level.
Step 4: calculating the accurate frequency deviation
   The accurate frequency deviation calculating module accurately calculates the current frequency deviation value by means of the demodulated pilot symbol. At the beginning, this frequency deviation value is relatively large and the delay correlation of two adjacent symbols can be used directly. With the frequency deviation being continuously converging, the frequency deviation value is becoming smaller gradually. When the angular difference between two adjacent symbols is smaller than a certain angle (for example 15 degrees), the delay correlation of non-adjacent symbols can be made. With the frequency deviation being reduced continuously, the interval between the two symbols used for the correlation is gradually enlarged. When the maximum interval is 10 symbols, the symbol correlation between slots is made. At this time, the evaluation precision can definitely meet the demand and the interval between the correlation symbols does not need to be further enlarged (figure 3 shows the calculation process).
Step 5: compensating the calculated accurate frequency deviation value
   The frequency deviation correction control module calculates the new frequency deviation compensation value according to the frequency deviation value reported by the accurate frequency deviation calculation module, controls the voltage control oscillator and compensates the current frequency deviation.
Step 6: closed loop control
   Steps 4 to 5 are repeated continuously to make the frequency deviation unceasingly converging.
Step 7: maintaining the temperature/frequency-deviation table
   When the frequency deviation value is smaller than 0.1PPM, the frequency locking determination module in the frequency deviation correction control module determines that it is currently the locking state. The maintenance on the temperature/frequency-deviation table is triggered. The frequency deviation correction control module acquires the current temperature from the temperature detector and updates the frequency deviation value corresponding to the current temperature by the current frequency deviation value so as to complete the maintenance and update on the temperature/frequency-deviation table.
Step 8 : saving the frequency deviation value of the cell when switching the cell
   When switching the cell (such as WCDMA compression measurement mode and hard handoff), and the frequency deviation correction control module stores the frequency deviation compensation value of the current cell before switching to the new cell.
Step 9 : acquiring the initial frequency deviation value of the new cell and completing the frequency locking
   If the cell after the switching is a new accessed cell (no matter the cell is at different frequency or the identical frequency), the current temperature is read in, according to which the temperature/frequency-deviation table is looked up, obtaining the initial frequency deviation value which is assigned to the new cell. Then the steps 3 to 7 are repeated to complete the frequency locking of the new cell.
Step 10: as for the cell ever measured, the experience frequency deviation value which is stored previously is taken as the initial frequency deviation to complete the frequency locking.
   If the cell after the switching has ever been measured (locking of frequency deviation compensation has been performed to the cell before the switching and the value is stored when the cell or frequency point is switched), the previously stored frequency deviation value is taken as the initial frequency deviation of the new accessed cell. Then the steps 3 to 7 are repeated to complete the frequency locking of the cell. As each time the cell is switched the frequency deviation value of the current cell is stored and the experience frequency deviation value of the accessed cell is taken as the initial frequency deviation, it is ensured that the Doppler frequency deviation of each cell can be tracked at each time of the switching.
Several typical operation modes are given according to different operation scenes.

### 1. The operation flow in the test mode

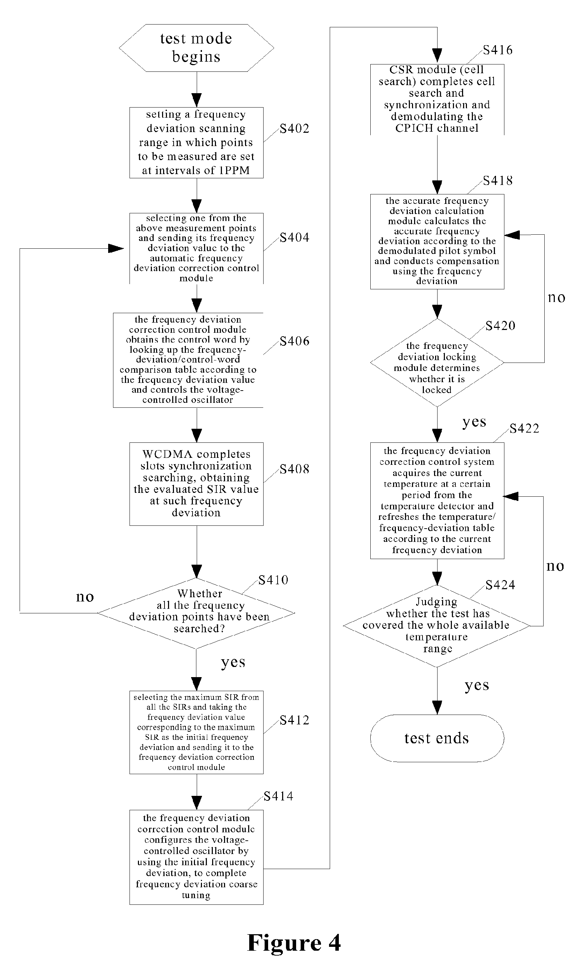

The test mode is used for the parameter scaling process at the delivery of a mobile phone. In this mode, the mobile phone automatically completes the initial frequency deviation search and the initialization of the frequency-deviation/temperature control table. During the test, a standard simulation base station is used to send signal to the mobile phone and the mobile phone completes the scaling process of the frequency-deviation/temperature control table at the time it finishes high and low temperature test. The particular implementation steps are as follows (figure 4 shows the operation flow in this mode):
Step S402: setting a frequency deviation scanning range (such as ±5PPM, in which measurement points are set at intervals of 1PPM);
Step S404: starting from -5PPM, the measurement point is selected in sequence and the selected frequency deviation value is sent to the automatic frequency deviation correction control module;
Step S406: the frequency deviation correction control module acquires the control word according to the selected frequency deviation value and controls the voltage control oscillator;
Step S408: at this frequency deviation level, the WCDMA terminal completes the first step of searching the cell - slots are synchronized and the SIR (signal interference ratio) is estimated;
Step S410: if the searching 11 points between -5PPM and +5PPM has not finished yet, return to the step S404. If the searching is finished, skip to the next step;
Step S412: the frequency deviation value corresponding to the maximum SIR from the 11 SIRs obtained by the measurement is selected to be sent to the frequency deviation correction control module;
Step S414: the frequency deviation correction control module configures the voltage control oscillator by using the received frequency deviation value and completes the coarse tuning on the frequency deviation;
Step S416: the WCDMA terminal completes the searching cell and the synchronization and demodulates the CPICH channel;
Step S418, the demodulated CPICH symbol is sent to the accurate frequency deviation calculation module. The module completes the calculation of frequency deviation and controls the voltage control oscillator by using the calculated frequency deviation compensation value;
Step S420: the frequency deviation calculation locking module determines whether the current frequency deviation is locked. Return to the previous step if it is not locked and skip to the next step if it is already locked;
Step S422: the frequency deviation correction control system acquires the current temperature from the temperature detector in terms of a certain period and updates the temperature/frequency-deviation table according to the current temperature;
Step S424: it is determined whether the whole available temperature range is covered. The test is finished and exits if the whole range is covered, otherwise it returns to the previous step until the test is finished.

### 2. The operation flow in the normal mode

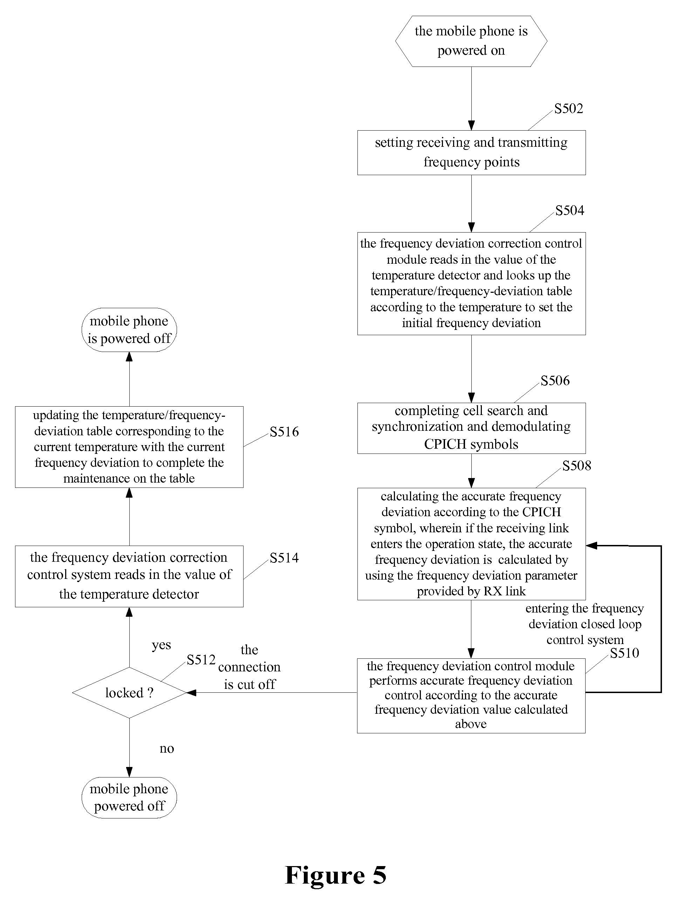

Mostly, a cell phone is operated in the normal mode, in which it completes the normal frequency deviation configuration and locking, and at each time the connection with the base station is shut, it completes the update and maintenance on the temperature/frequency-deviation table. The particular implementation steps are as follows (figure 5 shows the operation flow in this mode):
Step S502: Firstly the receiving and transmitting frequency points are set, when the terminal is powered on or is woken up from the sleep mode;
Step S504: The frequency deviation correction control module reads in the value of the temperature detector, looks up the temperature/frequency-deviation table according to the temperature value and configures the voltage control oscillator by taking the found frequency deviation value as the initial frequency deviation;
Step S506: The terminal completes the searching cell and the synchronization and demodulates CPICH symbol;

### Steps S508 and S510:

The accurate frequency deviation calculation module calculates the accurate frequency deviation value by using the demodulated CPICH symbol, and controls the voltage control oscillator using the calculated accurate frequency deviation compensation value. The two steps are continuously repeated during the operation process of the terminal;
Step S512: It is determined whether it is in the locking state when the terminal is about to be powered off or enter into the sleep mode;
Step S514: Firstly the current temperature is read in, if it is in the locking state. Then in step S516, the value in the frequency deviation table corresponding to the current temperature is refreshed by using the currently locked frequency deviation value to complete the maintenance on the table;

If currently not in the locking state, it directly exits.

### 3. The operation flow of the switching mode

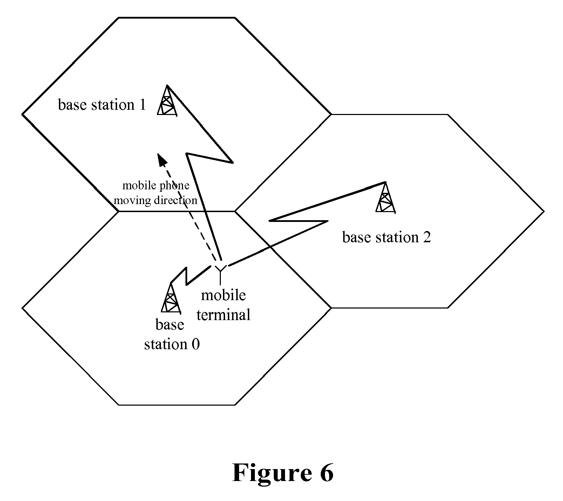

The switching mode is used in the WCDMA inter-frequency compression measurement mode, hard handoff and soft handoff. In this mode, the frequency deviation correction control system manages more than two frequency points or frequency deviation values of a cell, with the mode mainly used for compensating Doppler frequency deviation of the mobile terminal relative to a plurality of base stations, reducing the dropping-call rate during the compression measurement, hard handoff and soft handoff and keeping tracking the frequency deviation of each cell. Figure 6 shows the application environment, in which the mobile phone is associated with at least two cells. Three cells are drawn in the figure, in which the mobile phone, residing in the cell of base station 0, is moving to the cell where base station 1 is located and at the same time information of base stations 1 and 2 are being measured. As the terminal is moving, if the speed is relatively fast, the Doppler frequency deviation relative to each base station will be obviously different. In this case, the frequency deviation correction control system tracks the frequency deviation change of each cell and maintains the frequency deviation of each cell, ensuring keeping the frequency deviation of each cell locked throughout when the terminal switches the cell.

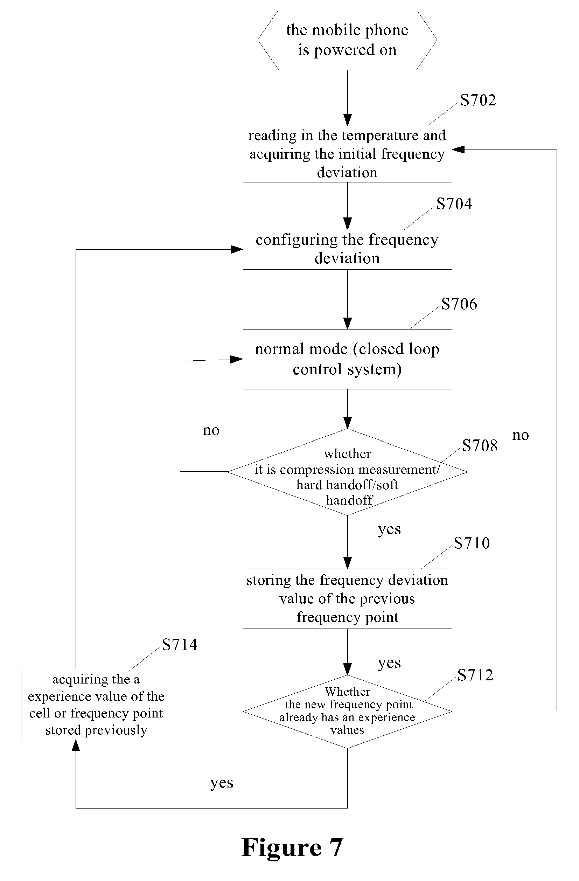

Substantially same with the normal mode, the switching mode only needs to manage the frequency deviation of two or more cells. The particular implementation steps are as follows (figure 7 shows the simple operation flow):
The terminal is powered on or is woken up from the sleep mode;
   Step S702: the current temperature is read in, and the initial frequency deviation is acquired according to the temperature/frequency-deviation table;
   Step S704: the voltage control oscillator is configured using the initial frequency deviation;
   Step S705: enter the normal operation mode to complete the closed loop compensation control on the frequency deviation;
   Step S708: if entering the operation mode of compression measurement/hard handoff/soft handoff, skip to the next step, otherwise return to the previous step;
   Step S710: firstly the frequency deviation value currently at the operaton frequency point is stored and it is inquired whether the frequency point to be switched in have an experience frequency deviation value that have been measured;
   Step S712: it is determined whether the new frequency point already has an experience value;
   Step S714: if the experience value exists, the step S704 is executed to configure the initial frequency deviation value by using the a experience value, completing switching to the frequency point or the coarse tuning on the cell frequency deviation;

Otherwise, return to the step S702 to read in the current temperature and acquire according to the temperature/frequency-deviation table the initial frequency deviation as the initial frequency deviation;

The closed loop compensation control in the normal mode is completed in the new cell.

It can be seen from the above that the present invention possesses the following advantageous effects:
1. This method provides an automatic maintenance on the temperature/frequency-deviation table and an completely automatic operation of the test scaling process on AFC without any aids of devices or manual work, so that the operation of initializing scaling can be performed automatically and very exactly during the high or low temperature test or in use. Even if the level of the crystal oscillation is changed, the operation of initializing scaling can be also completed, which greatly reduces the complexity of factory test of the terminal. The requirement on the precision of the crystal oscillation can be greatly reduced because of the automatic scaling process and a large range of frequency deviation scanning correction.
2. This method provides temperature/frequency-deviation compensation in the control layer. There is thereby no need to select the relatively expensive crystal oscillation with temperature compensation and a common voltage control crystal oscillation is enough.
3. This method provides a track on the Doppler frequency deviation, ensuring a good communication performance of the terminal in the condition of high speed movement and greatly reducing the probability of dropping-call rate during the inter-frequency switching and the intra-frequency switching.
4. This method provides maintenance on the temperature/frequency-deviation table. Each time the mobile phone is powered on, the current initial frequency deviation is acquired according to the current temperature, which enables the mobile phone to directly enter the operation mode with a smaller frequency deviation so as to increase the speed and success rate of the access of the mobile phone. This compensation can increase the success rate of the access very effectively, especially in the areas where the signal is relatively weak or under adverse environment with extreme high or low temperature.
5. This method provides a dynamic maintenance on the temperature/frequency-deviation compensation, enabling the terminal to always track the changes in performance of physical devices automatically and avoiding the reduction of performance caused by the aging of physical devices within the lifetime of the mobile terminal (generally speaking, the aging of a crystal oscillation is about ± 1PPM/year and additionally DAC converter also ages to a certain degree)
6. This method provides a large range of frequency deviation scanning, so that the terminal can be restored automatically after the temperature control/frequency-deviation table is out of effect, avoiding the disability of operation of the mobile phone caused by the software update of the mobile phone or the part replacement during the repair.

The performance of a mobile terminal in adverse environments is a very important key index. This method enables the terminal to have an outstanding performance in the field by providing a higher access performance and keeping a lower dropping-call rate in adverse environments (including high speed movement, extreme high or low temperature, weak signal in remote areas, downtown areas with great interferences).

Obviously, it would be understood by those skilled in the art that individual modules or steps of the present invention, which are integrated in a single calculation device or provided in a network composed by a plurality of calculation devices, can be realized by a universal calculation device. Alternatively, the modules or steps can be performed by using program codes executable by the calculation device, such that they can be stored in a storage device and executed by the calculation device or they can be made into individual integrate circuit modules respectively, or it can be realized that a plurality of modules or steps of them are made into a single integrate circuit module. In this way, the present invention is not limited to any specific combinations of hardware and software. It can be understood that the modifications of the embodiments, embraced in the scope of protection of the present invention, would be obvious for those skilled in the art.

The present invention has been shown with reference to the above-described embodiments, and it is not to be limited by the above embodiments. It is understood by those skilled in the art that various alterations and changes may be made to the present invention.

## Claims

1. An automatic frequency deviation correction method for a mobile terminal, **characterized in** comprising the step of configuring an initial frequency deviation value for the mobile terminal, which includes:
during the mobile terminal initially accesses a cell, it synchronizes slots at intervals of a predetermined frequency deviation within a predetermined frequency deviation scanning range, and obtains the signal-to-interference ratio SIR of primary synchronization signal at the frequency deviation (S802);
after scanning the whole predetermined frequency deviation scanning range, the frequency deviation value corresponding to the maximum SIR of all the obtained SIRs as the initial frequency deviation value (S804); and
the mobile terminal is configured with the initial frequency deviation value to make sure that the frequency deviation is controlled within the predetermined frequency deviation during the initial access (S806).

2. The automatic frequency deviation correction method according to claim 1, **characterized in that** the predetermined frequency deviation scanning range is ±5PPM and the predetermined frequency deviation is 1PPM.

3. The automatic frequency deviation correction method according to claim 1, **characterized in** further comprising the step of accurately calculating the current frequency deviation value, which includes:
after the mobile terminal is configured with the initial frequency deviation value, the mobile terminal completes the cell synchronization and demodulates pilot symbol; and
the current frequency deviation value is accurately calculated by using the pilot symbol (S808).

4. The automatic frequency deviation correction method according to claim 3, **characterized in that** the step of accurately calculating the current frequency deviation value comprises the following steps:
Step a, when the angular difference between two adjacent pilot symbols is greater than a first predetermined value, the delay correlation of the two adjacent pilot symbols is directly used for accurately calculating the current frequency deviation value;
Step b, with the initial frequency deviation value being gradually reduced, when the angular difference between the two adjacent pilot symbols is smaller than the first predetermined value and greater than a second predetermined value, the delay correlation of the pilot symbols which are not adjacent is made for accurately calculating the current frequency deviation value;
Step c, when the angular difference between the two adjacent pilot symbols is smaller than the second predetermined value, the correlation of the pilot symbols between slots is used for accurately calculating the current frequency deviation value.

5. The automatic frequency deviation correction method according to claim 4, **characterized in that** the first predetermined value is 15 degrees and the second predetermined value is 3.75 degrees,
the Step a comprises that when the angular difference between the two adjacent pilot symbols is greater than 15 degrees, the correlation of the two adjacent pilot symbols is used for accurately calculating the current frequency deviation value;
the Step b comprises that when the angular difference between the two adjacent pilot symbols is greater than 7.5 degrees, the correlation value of the pilot symbols between which another pilot symbol exists is used for accurately calculating the current frequency deviation value; when the angular difference between the two adjacent pilot symbols is greater than 3.75 degrees, the correlation value of the pilot symbols between which another four pilot symbols exist is used for accurately calculating the current frequency deviation value;
the Step c comprises that when the angular difference between the two adjacent pilot symbols is smaller than 3.75 degrees, the correlation of the pilot symbols between slots is used for accurately calculating the current frequency deviation value.

6. The automatic frequency deviation correction method according to claim 3 **characterized in** further comprising the step of feedback control, which includes:
a new frequency deviation compensation value is calculated according to the current frequency deviation value to compensate the current frequency deviation value;
the step of accurately calculating the current frequency deviation value and the step of compensating the current frequency deviation value are repeated continuously to make the new frequency deviation compensation value continuously converging (S810).

7. The automatic frequency deviation correction method according to claim 6 **characterized in** further comprising the step of maintaining a temperature/frequency-deviation table, which includes:
when the current frequency deviation value is smaller than a predetermined value, it is determined to currently be the locking state and the current temperature which the mobile terminal is at is acquired, and the frequency deviation value in the temperature/frequency-deviation table corresponding to the current temperature is updated by the current frequency deviation value (S812).

8. The automatic frequency deviation correction method according to claim 7, **characterized in** further comprising the step of Doppler frequency deviation compensation, which includes:
when the mobile terminal switches the cell, the frequency deviation compensation value of the current cell is stored before switching to a new cell;
after switching to the new cell, the current temperature of the new cell is read in, which then is looked up in the temperature/frequency-deviation table, acquiring the initial frequency deviation value of the new cell which is assigned to the new cell, wherein if the new cell is ever measured, the frequency deviation compensation value which is stored previously is taken as the initial frequency deviation value of the new cell;
the step of accurately calculating the current frequency deviation value, the step of feedback control and the step of maintaining the temperature/frequency-deviation table are repeated until completing the frequency locking of the new cell (S814).

9. An automatic frequency deviation correction system for a mobile terminal **characterized in** comprising:
an initial frequency deviation scanning evaluation module (104) used for synchronizing slots at intervals of a predetermined frequency deviation within a predetermined frequency deviation scanning range when the mobile terminal initially accesses a cell so as to obtain the signal-to-interference ratio SIR of primary synchronization signal at such frequency deviation; and used for selecting as the initial frequency deviation value the frequency deviation value corresponding to the maximum SIR of all the SIRs obtained after scanning the whole predetermined frequency deviation scanning range; and
a frequency deviation correction control module (108) used for configuring the mobile terminal with the initial frequency deviation value, assuring that the frequency deviation is controlled within the predetermined frequency deviation during the initial access.

10. The automatic frequency deviation correction system according to claim 9 **characterized in** further comprising:
a temperature detection module (102) for checking ambient temperature and transmitting the temperature to the frequency deviation correction control module;
an accurate frequency deviation calculation module (106) for accurately calculating the current frequency deviation value wherein the pilot symbol, which is obtained after the mobile terminal is configured with the initial frequency deviation value and the pilot symbol is demodulated, is used;
a feedback control loop for calculating a new frequency deviation compensation value according to the current frequency deviation value to compensate the current frequency deviation value;
wherein the frequency deviation correction control module is also used for calculating the new frequency deviation compensation value according to the current frequency deviation value and controlling a voltage control oscillator to compensate the current frequency deviation value;
the frequency deviation correction control module is also used by a way in which when the mobile terminal switches the cell the frequency deviation correction control module stores the frequency deviation compensation value of the current cell before switching to a new cell, and after switching to the new cell it reads in the current temperature of the new cell which is looked up in the temperature/frequency-deviation table obtaining the initial frequency deviation value of the new cell which is assigned to the new cell, wherein if the new cell is ever measured, the frequency deviation compensation value stored previously is taken as the initial frequency deviation value of the new cell;
the frequency deviation correction control module is also used for controlling the operation of the feedback control loop, such that the temperature detection module and accurate frequency deviation calculation module are operated repeatedly and continuously until completing the frequency locking of the mobile terminal.

## Patentansprüche

1. Verfahren zur automatischen Frequenzabweichungs-Korrektur eines mobilen Endgerätes, **gekennzeichnet durch** den Schritt der Bildung eines anfänglichen Frequenzabweichungswertes für das mobile Endgerät, enthaltend die folgenden Schritte:
während das mobile Endgerät anfänglich in eine Zelle eintritt, synchronisiert es Schlitze in Intervallen einer vorbestimmten Frequenzabweichung innerhalb eines vorbestimmten Frequenzabweichungs-Abtastbereiches und erhält das Signal-zu-Interferenz-Verhältnis des ersten Synchronisierungssignals bei der Frequenzabweichung (S802);
wobei nach dem Abtasten des vorbestimmten Frequenzabweichungs-Abtastbereiches der Frequenzabweichungswert dem maximalen Signal-zu-Interferenz-Verhältnis SIR aller erhaltener SIRs als der anfängliche Frequenzabweichungswert (S804) feststeht; und
das mobile Endgerät mit dem anfänglichen Frequenzabweichungswert versehen wird, um sicherzustellen, daß die Frequenzabweichung in der vorbestimmten Frequenzabweichung während des anfänglichen Eintritts (S806) gesteuert wird.

2. Verfahren zur automatischen Frequenzabweichungs-Korrektur nach Anspruch 1, **dadurch gekennzeichnet, daß** der vorbestimmte Frequenzabweichung-Abtastbereich ±5 PPM ist und die vorbestimmte Frequenzabweichung 1 PPM beträgt.

3. Verfahren zur automatischen Frequenzabweichungs-Korrektur nach Anspruch 1, **dadurch gekennzeichnet, daß** es den Schritt der genauen Berechnung des Stromabweichungswertes umfaßt, der beinhaltet, daß, nachdem das mobile Endgerät mit dem anfänglichen Frequenzabweichungswert versehen wurde, das mobile Endgerät die Zellensynchronisation vervollständigt und das Pilotsymbol demoduliert, und des weiteren beinhaltet, daß der Frequenzabweichungswert durch Verwendung des Pilotsymbols (S808) genau berechnet wird.

4. Verfahren zur automatischen Frequenzabweichungs-Korrektur nach Anspruch 3, **dadurch gekennzeichnet, daß** der Schritt der genauen Berechnung des Frequenzabweichungswertes die folgenden Schritte umfaßt:
Schritt a, wenn die Winkeldifferenz zwischen den beiden benachbarten Pilotsymbolen größer ist als ein erster vorbestimmter Wert, dann wird die Verzögerungskorrelation der beiden benachbarten Pilotsymbole direkt zur genauen Berechnung des Stromfrequenzabweichungswertes benutzt;
Schritt b, der anfängliche Frequenzabweichungswert wird allmählich reduziert, wenn die Winkeldifferenz zwischen den beiden benachbarten Pilotsymbolen kleiner ist als der erste vorbestimmte Wert und größer ist als ein zweiter vorbestimmter Wert, wobei die Verzögerungskorrelation der Pilotsymbole,
die nicht benachbart sind, zur genauen Berechnung des Stromfrequenzabweichungswertes dient;
Schritt c, wenn die Winkeldifferenz zwischen den beiden benachbarten Pilotsymbolen kleiner ist als der zweite vorbestimmte Wert, wird die Korrelation der Pilotsymbole zwischen Schlitzen zur genauen Berechnung des Stromfrequenzabweichungswertes benutzt.

5. Verfahren zur automatischen Frequenzabweichungs-Korrektur nach Anspruch 4, **dadurch gekennzeichnet, daß** der erste vorbestimmte Wert 15° beträgt und der zweite vorbestimmte Wert 3,75°,
daß der Schritt a beinhaltet, daß dann, wenn die Winkeldifferenz zwischen den beiden benachbarten Pilotsymbolen größer als 15° ist, die Korrelation der beiden benachbarten Pilotsymbole zur genauen Berechnung des Stromfrequenzabweichungswertes benutzt wird;
daß des weiteren der Schritt b beinhaltet, daß dann, wenn die Winkeldifferenz zwischen den beiden benachbarten Pilotsymbolen größer als 7,5° ist, der Korrelationswert der Pilotsymbole, zwischen denen ein anderes Pilotsymbol existiert, zur genauen Berechnung des Stromfrequenzabweichungswertes benutzt wird und dann, wenn die Winkeldifferenz zwischen den beiden benachbarten Pilotsymbolen größer als 3,75° ist, der Korrelationswert der Pilotsymbole, zwischen denen andere vier Pilotsymbole existieren, zur genauen Berechnung des Stromfrequenzabweichungswertes benutzt wird;
und daß
der Schritt c umfaßt, daß dann, wenn die Winkeldifferenz zwischen den beiden benachbarten Pilotsymbolen kleiner als 3,75° ist, die Korrelation der Pilotsymbole zwischen Schlitzen zur genauen Berechnung des Stromfrequenzabweichungswertes benutzt wird.

6. Verfahren zur automatischen Frequenzabweichungs-Korrektur nach Anspruch 3, **gekennzeichnet durch** den weiteren Schritt der Feedback-Steuerung, der folgendes umfaßt:
einen neuen Frequenzabweichungs-Kompensationswert, berechnet gemäß dem Stromfrequenzabweichungswert, um **dadurch** den Stromfrequenzabweichungswert zu kompensieren, wobei der Schritt der genauen Berechnung des Stromfrequenzabweichungswertes und der Schritt der Kompensierung des Stromfrequenzabweichungswertes kontinuierlich wiederholt werden, um zu erreichen, daß der neue Frequenzabweichungs-Kompensationswert kontinuierlich konvergiert (S810).

7. Verfahren zur automatischen Frequenzabweichungs-Korrektur nach Anspruch 6, **dadurch gekennzeichnet, daß** es des weiteren den Schritt der Erhaltung einer Temperatur- / Frequenzabweichungstabelle umfaßt, der beinhaltet, daß dann,
wenn der Stromfrequenzabweichungswert kleiner ist als ein vorbestimmter Wert, er dazu bestimmt wird, laufend den Sperrzustand zu bilden, während die laufende Temperatur, auf der sich das mobile Endgerät befindet, angestrebt wird, erreicht ist, und der Frequenzabweichungswert in der Temperatur- / Frequenzabweichungstabelle, der der gegenwärtigen Temperatur entspricht, durch den Stromfrequenzabweichungswert (S812) aktualisiert wird.

8. Verfahren zur automatischen Frequenzabweichungs-Korrektur nach Anspruch 7, **dadurch gekennzeichnet, daß** es des weiteren den Schritt der Doppler-Frequenzabweichungs-Kompensation umfaßt, der beinhaltet, daß dann, wenn das mobile Endgerät die Zelle schaltet, der Frequenzabweichungs-Kompensationswert der Stromzelle gespeichert wird, bevor eine neue Zelle geschaltet wird, daß des weiteren nach dem Schalten der neuen Zelle die Stromtemperatur der neuen Zelle eingelesen wird, die dann in der Temperatur- / Frequenzabweichungstabelle erscheint, und daß des weiteren der anfängliche Frequenzabweichungswert der neuen Zelle, der der neuen Zelle zugeordnet wird, erreicht wird, wobei, wenn die neue Zelle immer gemessen wird, der Frequenzabweichungs-Kompensationswert, der vorher gespeichert wird, als anfänglicher Frequenzabweichungswert der neuen Zelle angenommen wird, und schließlich gehört zu dem Doppler-Frequenzabweichungs-Kompensationsschritt der Schritt der genauen Berechnung des Stromfrequenzabweichungswertes, der Schritt der Feedback-Steuerung sowie der Schritt der Aufrechterhaltung der Temperatur- / Frequenzabweichungstabelle, wobei diese Schritte wiederholt werden, bis die Frequenzfestlegung der neuen Zelle (S814) vervollständigt ist.

9. System zur automatischen Frequenzabweichungs-Korrektur für ein mobiles Endgerät, **gekennzeichnet durch** einen anfänglichen Frequenzabweichungs-Abtastbewertungsmodul (104), der zur Synchronisierung von Schlitzen in Intervallen einer vorbestimmten Frequenzabweichung in einem vorbestimmten Frequenzabweichungs-Abtastbereich benutzt wird, wenn das mobile Endgerät anfänglich in eine Zelle eintritt, um das Signal-zu-Interferenz-Verhältnis (SIR) des primären Synchronisationssignals bei einer solchen Frequenzabweichung zu erhalten, wobei der Modul ferner zur Auswahl als der anfängliche Frequenzabweichungswert benutzt wird, der dem Maximum des SIR aller SIRs entspricht, die nach dem Scannen des vorbestimmten Frequenzabweichungs-Scannbereiches erhalten werden; und ferner aufweisend einen Frequenzabweichungs-Korrektursteuermodul (108), der zur Ausstattung des mobilen Endgerätes mit dem anfänglichen Frequenzabweichungswert benutzt wird, indem sichergestellt wird, daß die Frequenzabweichung innerhalb der vorbestimmten Frequenzabweichung während des anfänglichen Zugriffs gesteuert wird.

10. System zur automatischen Frequenzabweichungs-Korrektur nach Anspruch 9, weiter **gekennzeichnet durch** einen Temperaturanzeigemodul (102) zur Überprüfung der Umgebungstemperatur und Übertragung der Temperatur der Temperatur auf den Frequenzabweichungs-Korrektursteuermodul; einen genauen Frequenzabweichungs-Berechnungsmodul (106) zur genauen Berechnung des Stromfrequenzabweichungswertes, wobei das Pilotsymbol verwendet wird, das erhalten wird, nachdem das mobile Endgerät mit dem anfänglichen Frequenzabweichungswert versehen ist, und das Pilotsymbol demoduliert ist; ferner umfassend eine Feedback-Steuerschleife zur Berechnung eines neuen Frequenzabweichungs-Kompensationswertes gemäß dem Stromfrequenzabweichungswert zur Kompensierung des Stromfrequenzabweichungswertes, wobei der Frequenzabweichungs-Korrektursteuermodul ebenfalls zur Berechnung des neuen Frequenzabweichungs-Kompensationswertes verwendet wird, und zwar gemäß dem Stromfrequenzabweichungswert, und ein Spannungssteuer-Oszillator gesteuert wird, um den Stromfrequenzabweichungswert zu kompensieren, wobei des weiteren der Frequenzabweichungs-Korrektursteuermodul ebenfalls auf eine Weise benutzt wird, bei der dann, wenn das mobile Endgerät die Zelle schaltet, der Frequenzabweichungs-Korrektursteuermodul den Frequenzabweichungs-Kompensationswert der Stromzelle speichert, bevor zu einer neuen Zelle geschaltet wird, und nach der Schaltung zu der neuen Zelle sie die Stromtemperatur der neuen Zelle einliest, die in der Temperatur- / Frequenzabweichungstabelle erscheint, wobei der anfängliche Frequenzabweichungswert der neuen Zelle erhalten wird, welcher der neuen Zelle zugewiesen wird, und wobei dann, wenn die neue Zelle immer gemessen wird, der Frequenzabweichungs-Kompensationswert, der vorher gespeichert wurde, als anfänglicher Frequenzabweichungswert der neuen Zelle genommen wird; und wobei schließlich der Frequenzabweichungs-Korrektursteuermodul ebenfalls zur Steuerung des Betriebs der Feedback-Steuerschleife benutzt wird, und zwar derart, daß der Temperaturabweichungsmodul und der genaue Frequenzabweichungs-Berechnungsmodul wiederholt und kontinuierlich benutzt werden, bis die Frequenzeinstellung des mobilen Endgerätes vollzogen ist.

## Revendications

1. Procédé de correction automatique de déviation de fréquence pour un terminal mobile, **caractérisé en ce qu'**il comprend l'étape de configuration d'une valeur de déviation de fréquence initiale pour le terminal mobile, qui comprend :
pendant que le terminal mobile accède initialement à une cellule, il synchronise des créneaux à des intervalles d'une déviation de fréquence prédéterminée à l'intérieur d'une plage de balayage de déviation de fréquence prédéterminée, et obtient le rapport signal sur interférence SIR du signal de synchronisation primaire à la déviation de fréquence (S802) ;
après balayage de la totalité de la plage de balayage de déviation de fréquence prédéterminée, la valeur de déviation de fréquence correspondant au SIR maximal de tous les SIR obtenus comme valeur de déviation de fréquence initiale (S804) ; et
le terminal mobile est configuré avec la valeur de déviation de fréquence initiale pour s'assurer que la déviation de fréquence est régulée à l'intérieur de la déviation de fréquence prédéterminée pendant l'accès initial (S806).

2. Procédé de correction automatique de déviation de fréquence selon la revendication 1, **caractérisé en ce que** la plage de balayage de déviation de fréquence prédéterminée est de ± 5 PPM et la déviation de fréquence prédéterminée est de 1 PPM.

3. Procédé de correction automatique de déviation de fréquence selon la revendication 1, **caractérisé en ce qu'**il comprend en outre l'étape de calcul précis de la valeur de déviation de fréquence actuelle, qui comprend :
après que le terminal mobile est configuré avec la valeur de déviation de fréquence initiale, le terminal mobile achève la synchronisation de cellule et démodule le symbole pilote ; et
la valeur de déviation de fréquence actuelle est calculée précisément en utilisant le symbole pilote (S808).

4. Procédé de correction automatique de déviation de fréquence selon la revendication 3, **caractérisé en ce que** l'étape de calcul précis de la valeur de déviation de fréquence actuelle comprend les étapes suivantes :
l'étape a, lorsque la différence angulaire entre deux symboles pilotes adjacents est supérieure à une première valeur prédéterminée, la corrélation de retard des deux symboles pilotes adjacents est directement utilisée pour calculer précisément la valeur de déviation de fréquence actuelle ;
l'étape b, la valeur de déviation de fréquence initiale étant progressivement réduite, lorsque la différence angulaire entre les deux symboles pilotes adjacents est inférieure à la première valeur prédéterminée et supérieure à une seconde valeur prédéterminée, la corrélation de retard des symboles pilotes qui ne sont pas adjacents est réalisée pour calculer précisément la valeur de déviation de fréquence actuelle ;
l'étape c, lorsque la différence angulaire entre les deux symboles pilotes adjacents est inférieure à la seconde valeur prédéterminée, la corrélation des symboles pilotes entre des créneaux est utilisée pour calculer précisément la valeur de déviation de fréquence actuelle.

5. Procédé de correction automatique de déviation de fréquence selon la revendication 4, **caractérisé en ce que** la première valeur prédéterminée est de 15 degrés et la seconde valeur prédéterminée est de 3,75 degrés,
l'étape a comprend le fait que lorsque la différence angulaire entre les deux symboles pilotes adjacents est supérieure à 15 degrés, la corrélation des deux symboles pilotes adjacents est utilisée pour calculer précisément la valeur de déviation de fréquence actuelle ;
l'étape b comprend le fait que lorsque la différence angulaire entre les deux symboles pilotes adjacents est supérieure à 7,5 degrés, la valeur de corrélation des symboles pilotes entre lesquels un autre symbole pilote existe est utilisée pour calculer précisément la valeur de déviation de fréquence actuelle ; lorsque la différence angulaire entre les deux symboles pilotes adjacents est supérieure à 3,75 degrés, la valeur de corrélation des symboles pilotes entre lesquels quatre autres symboles pilotes existent est utilisée pour calculer précisément la valeur de déviation de fréquence actuelle ;
l'étape c comprend le fait que lorsque la différence angulaire entre les deux symboles pilotes adjacents est inférieure à 3,75 degrés, la corrélation des symboles pilotes entre les créneaux est utilisée pour calculer précisément la valeur de déviation de fréquence actuelle.

6. Procédé de correction automatique de déviation de fréquence selon la revendication 3, **caractérisé en ce qu'**il comprend en outre l'étape de commande à rétroaction, qui comprend :
une nouvelle valeur de compensation de déviation de fréquence est calculée selon la valeur de déviation de fréquence actuelle pour compenser la valeur de déviation de fréquence actuelle ;
l'étape de calcul précis de la valeur de déviation de fréquence actuelle et l'étape de compensation de la valeur de déviation de fréquence actuelle sont répétées en continu afin de faire converger en continu (S810) la nouvelle valeur de compensation de déviation de fréquence.

7. Procédé de correction automatique de déviation de fréquence selon la revendication 6, **caractérisé en ce qu'**il comprend en outre l'étape de tenue d'une table de température/déviation de fréquence, qui comprend :
lorsque la valeur de déviation de fréquence actuelle est inférieure à une valeur prédéterminée, elle est déterminée comme étant actuellement dans l'état de verrouillage et la température actuelle à laquelle se trouve le terminal mobile est acquise, et la valeur de déviation de fréquence dans la table de température/déviation de fréquence correspondant à la température actuelle est mise à jour par la valeur de déviation de fréquence actuelle (S812).

8. Procédé de correction automatique de déviation de fréquence selon la revendication 7, **caractérisé en ce qu'**il comprend en outre l'étape de compensation de déviation de fréquence Doppler, qui comprend :
lorsque le terminal mobile commute la cellule, la valeur de compensation de déviation de fréquence de la cellule actuelle est stockée avant de commuter à une nouvelle cellule ;
après la commutation à la nouvelle cellule, la température actuelle de la nouvelle cellule est lue, laquelle est ensuite consultée dans la table de température/déviation de fréquence, l'acquisition de la valeur de déviation de fréquence initiale de la nouvelle cellule qui est attribuée à la nouvelle cellule, dans lequel, si jamais la nouvelle cellule est mesurée, la valeur de compensation de déviation de fréquence qui est précédemment stockée est prise comme la valeur de déviation de fréquence initiale de la nouvelle cellule ;
l'étape de calcul précis de la valeur de déviation de fréquence actuelle, l'étape de commande à rétroaction et l'étape de tenue de la table de température/déviation de fréquence sont répétées jusqu'à achèvement du verrouillage de fréquence de la nouvelle cellule (S814).

9. Système de correction automatique de déviation de fréquence pour un terminal mobile, **caractérisé en ce qu'**il comprend :
un module d'évaluation de balayage de déviation de fréquence initiale (104) utilisé pour synchroniser des créneaux à des intervalles d'une déviation de fréquence prédéterminée à l'intérieur d'une plage de balayage de déviation de fréquence prédéterminée lorsque le terminal mobile accède initialement à une cellule de façon à obtenir le rapport signal sur interférence SIR du signal de synchronisation primaire à une telle déviation de fréquence ; et utilisé pour sélectionner en tant que valeur de déviation de fréquence initiale, la valeur de déviation de fréquence correspondant au SIR maximal de tous les SIR obtenus après balayage de la totalité de la plage de balayage de déviation de fréquence prédéterminée ; et
un module de régulation de correction de déviation de fréquence (108) utilisé pour configurer le terminal mobile avec la valeur de déviation de fréquence initiale, garantissant que la déviation de fréquence est régulée à l'intérieur de la déviation de fréquence prédéterminée pendant l'accès initial.

10. Système de correction automatique de déviation de fréquence selon la revendication 9, **caractérisé en ce qu'**il comprend en outre :
un module de détection de température (102) destiné à vérifier la température ambiante et transmettre la température au module de régulation de correction de déviation de fréquence ;
un module de calcul précis de déviation de fréquence (106) destiné à calculer précisément la valeur de déviation de fréquence actuelle, dans lequel le symbole pilote, qui est obtenu après que le terminal mobile est configuré avec la valeur de déviation de fréquence initiale et que le pilote symbole est démodulé, est utilisé ;
une boucle de commande à rétroaction destinée à calculer une nouvelle valeur de compensation de déviation de fréquence selon la valeur de déviation de fréquence actuelle pour compenser la valeur de déviation de fréquence actuelle ;
dans lequel le module de régulation de correction de déviation de fréquence est également utilisé pour calculer la nouvelle valeur de compensation de déviation de fréquence selon la valeur de déviation de fréquence actuelle et commander un oscillateur de régulation de tension pour compenser la valeur de déviation de fréquence actuelle ;
le module de régulation de correction de déviation de fréquence est également utilisé de la façon suivante, lorsque le terminal mobile commute la cellule, le module de régulation de correction de déviation de fréquence stocke la valeur de compensation de déviation de fréquence de la cellule actuelle avant la commutation à une nouvelle cellule, et après commutation à la nouvelle cellule, il lit la température actuelle de la nouvelle cellule qui est consultée dans la table de température/déviation de fréquence, obtenant la valeur de déviation de fréquence initiale de la nouvelle cellule qui est attribuée à la nouvelle cellule, dans lequel si jamais la nouvelle cellule est mesurée, la valeur de compensation de déviation de fréquence précédemment stockée est prise comme valeur de déviation de fréquence initiale de la nouvelle cellule ;
le module de régulation de correction de déviation de fréquence est également utilisé pour réguler le fonctionnement de la boucle de commande à rétroaction, de sorte que le module de détection de température et le module de calcul précis de déviation de fréquence sont exploités de façon répétée et continue jusqu'à achèvement du verrouillage de fréquence du terminal mobile.
